# EUROPEAN PATENT APPLICATION

(11) **EP 3 144 452 A1**
(43) Date of publication of application: **22.03.2017**
(21) Application number: 16189347.4
(22) Date of filing: 16.09.2016
(51) Int. Cl.: E04H 9/14, E02D 27/06, E02D 27/52, B63B 35/44

(54) **BUILDING SYSTEM**

(30) Priority: 18.09.2015 GB 201516534; 05.02.2016 GB 201602138
(71) Applicant: Walwin, Kent, London SW8 1TD (GB)
(72) Inventor: Walwin, Kent, London SW8 1TD (GB)
(74) Representative: Pearce, David Henry

(57) **Abstract**

Building system (100) comprising a foundation key (103) supporting a building, which may in some embodiments be floatable, for example during flood events. The foundation key (103) comprisies an elongate beam (108) with an upper surface (107) and a support securing the foundation key to the ground; The building (125) comprises a base (101) supporting a superstructure (102), the base (101) having a bottom surface (105) with a recess (106) shaped to correspond to the shape of the upper surface (107) of the elongate beam (108) and adapted to locate the base (101) over the elongate beam (108) such that the foundation key (103) supports the weight of the building (125).

## Description

### Field of the Invention

The invention relates to a building system comprising a foundation key supporting a building, which may in some embodiments be floatable, for example during flood events.

### Background

Natural floodplains are generally recognised as being a central element in flood management. Floodplains provide space for flood water from expanding rivers to spread into, thereby reducing pressure on flood defences and limiting flooding further downstream. Building on such floodplains, as well as exposing such building to flood risks, can result in increasing the impact of any floods due to built-on land not being capable of absorbing flood water to the same extent. If flood defences are used, these will further exacerbate flooding downstream.

Despite the advantages of leaving natural floodplains intact, the pressure of growing populations in developed countries such as the UK places pressure on expanding into floodplains, even though this places homes and businesses on land that is likely to flood. These buildings, and the flood defences they often require, reduce the effectiveness of floodplains, to the detriment of towns further downstream. The buildings themselves are liable to flood, making insurance for the properties difficult or expensive to obtain.

A solution is therefore required that balances the need for increased use of available land for buildings with the environmental benefit of effective floodplains. A traditional solution is to build houses on stilts or piers, so that the habitable superstructure of the house is permanently held above a likely flooding level. More recently, floatable buildings have been used. Such buildings function similarly to floating docks, and typically comprise a superstructure sitting on an expanded foam base, attached to guideposts to keep the building in place.

Existing floatable or raised buildings still require a large physical footprint on the land. This is generally undesirable on floodplains, where the impact of buildings on the land should ideally be minimised.

A further problem with existing building systems is the cost of construction, which generally involves laying substantial foundations, typically using large amounts of concrete, and then constructing a building in situ on top of the foundations. This is both labour intensive and costly in terms of materials. Conventional concrete, in particular, has a high carbon intensity, largely due to the need for high temperature calcination in the manufacturing process of hydraulic cement.

### Summary of the Invention

In accordance with a first aspect of the invention there is provided a building system comprising:
a foundation key comprising an elongate beam with an upper surface and a support securing the foundation key to the ground; and
a building comprising a base supporting a superstructure, the base having a bottom surface with a recess shaped to correspond to the shape of the upper surface of the elongate beam and adapted to locate the base over the elongate beam such that the foundation key supports the weight of the building.

An advantage of using a foundation key with a building having a corresponding surface is that the foundation key can be made small relative to the building and the building can be prefabricated, allowing for cheaper modular construction that uses less material for the foundation and less labour in the construction of the building system.

The foundation key may be modified to suit the environment on which the building system is to be constructed. The foundation key may, for example, comprise piling extending into the ground below the elongate beam to support the beam. Two or more piles extending into the ground will typically be used, more than two being required in cases where the ground is less stable or depending on the overall length of the beam and building. The piles may extend further into the ground depending on the subsurface material and the depth at which bedrock may be found.

The recess may comprise an upper surface and two sides which taper towards the upper surface, such that the recess is narrower at the upper surface. Similarly, the elongate beam of the foundation key may comprise a top surface and two sides which taper towards the top surface, such that a width of the elongate beam is narrower across the top surface. An angle between the two tapering sides of the elongate beam and the recess may be equal, such that the hull sits securely on the foundation key. Such a shape of the recess and elongate beam may also be particularly advantageous for encouraging the correct self-location of the building on the foundation key. An angle between each side surface of the elongate beam and/or the recess may be between 15 and 45 degrees, optionally between 25 and 35 degrees, and optionally around 30 degrees, to the vertical when the foundation key is in position in the ground. Each side surface of the elongate beam and/or the recess may comprise a layer of a compressible polymeric material.

In some embodiments the base of the building may comprise a hull defining a buoyant chamber in which the recess is provided, thereby providing a floatable building. The hull is preferably of sufficient volume to provide buoyancy to support the weight of the building in flood conditions.

During dry conditions, the floatable building rests on, and is supported by, the foundation key. The foundation key, being of elongate form, provides a reduced footprint on the land. During flood events, the floatable building is buoyed up by the flood water and rises off the foundation key, keeping the superstructure above the flood water. Because of the reduced physical footprint provided by the foundation key, the ground on which the building system is built may be left substantially intact, maximising the water storage capacity of the ground. For example, the physical footprint of a floatable building according to this invention, as defined by the footprint of the foundation key, may be less than 33%, less than 20%, and optionally between 10 and 15% of the footprint of the building.

The foundation key may be adapted to suspend the building above ground level, for example less than 30cm, greater than 2.5 cm and optionally between 30cm and 15cm, above the ground. For example, the height of the foundation key above ground level may be greater than the depth of the recess in the base, so that the unsupported part of the bottom surface of the base is suspended above the ground. This may be particularly advantageous for preventing rusting or fouling of the hull that may otherwise occur due to contact with the ground, and also enables the building to be more easily removed intact if required.

In some embodiments, the building may further comprise a sealable utility port located in the recess of the base, the utility port configured as a watertight port for connecting utility services to the building such as water, electricity, telephone, internet and sewage connections.

The foundation key may comprise an internal chamber, which may be adapted for storing waste products such as effluent from the building, and/or to provide a space for utility services such as water, electricity, a telephone line, or an internet connection to be connected to the building. The foundation key may further comprise an access port in communication with the internal chamber to allow access to the internal chamber. For example, waste products may pass into the internal chamber through the access port, and/or utility services may pass out of the internal chamber through the access port (or through a separate access port).

An extendable or flexible tube may be connected at a first end to the access port of the foundation key and at a second end to the utility port of the floatable building. By using an extendable or flexible tube to connect the building to the internal chamber of the foundation key, a constant connection may be maintained between the building and foundation key during flood events. The supply of utility services to the building, or outlet of waste products from the building, may therefore be maintained without interruption during floods.

The building system may comprise an anchoring system for limiting horizontal movement of the building, the anchoring system comprising one or more slidable connections between the building and the ground. The anchoring system may be adapted to horizontally secure the building relative to the foundation key. An anchoring system may, in particular, be required when flood water is likely to rise above the height of the foundation key. In alternative embodiments, an anchoring system may not be required where only low level floods are expected, in which case the building may rise only slightly relative to the foundation key, such that the building will automatically re-locate in the correct position on the foundation key when the flood water recedes. To assist this, the foundation key and recess may both be shaped to encourage the correct positioning of the building on the foundation key. The anchoring system may comprise a post slidably connected to the hull or the superstructure of the building, and a support pile connected to the post, the pile adapted to secure the post when in use to the ground. For example, the post may be slidably connected to the hull or the superstructure by means of a slidable collar through which the post passes, the slidable collar being fixedly attached to the hull or the superstructure.

In a preferred embodiment of the anchoring system, the building system may comprise at least four posts slidably connected to the hull or the superstructure, each post being connected to a support pile securing the post to the ground. Such an arrangement may maintain a substantially constant position of the building over the foundation key during floods, so that the building may re-locate in the correct position on the foundation key when the flood water recedes.

The post or posts may be steel, while the support pile or piles may be concrete.

In some embodiments of the building system, the base of the building may comprise two laterally adjacent hull sections, and the recess may be formed by a space between the hull sections. For example, the hull may comprise two separate catamaran style hull sections. A catamaran shape of hull provides increased stability for the building, while allowing for the recess to be used to locate the hull over the foundation key.

In some embodiments of the building system, at least one of the elongate beam and the foundation key support of the foundation key may comprise concrete. The foundation key support may be at least partly buried in the ground. The foundation key may be in the form of a single component, of which a first (above ground) part functions as the elongate beam, and a second (below ground) part functions as the foundation key support. For example, the foundation key may be constructed by excavating a pit in the ground, filling the pit with concrete to form the foundation key support, and moulding a concrete elongate member on top of the foundation key support. In some embodiments, the foundation key may be divided into a plurality of smaller foundation key pieces, with the recess of the floatable building shaped to correspond to the shape and location of the plurality of foundation key pieces. As mentioned above, the foundation key may also comprise piling extending into the ground beneath the elongate member that secures the foundation key in place and provides further support.

According to a second aspect of the invention there is provided a building comprising a base supporting a superstructure, the base having a bottom surface with a recess shaped to be locatable on a correspondingly shaped foundation key, the recess comprising an upper surface and two sides which taper towards the upper surface, such that the recess is narrower at the upper surface.

The building of the second aspect of the invention may further comprise any feature of any embodiment of the building described in relation to the building system of the first aspect of the invention.

According to a third aspect of the invention there is provided a foundation key for supporting a building, the foundation key comprising: an elongate beam adapted to be locatable in a recess of a building and to support the weight of the building; and a foundation key support connected to the elongate beam, the foundation key support securing the foundation key to the ground, the elongate beam having a top surface and two sides tapering towards the top surface such that a width of the elongate beam is narrower across the top surface.

The elongate beam may be secured to the foundation key support, or the elongate beam and foundation key may be of unitary construction.

The foundation key of the third aspect of the invention may further comprise any feature of any embodiment of the foundation key described in relation to the building system of the first aspect of the invention.

According to a fourth aspect of the invention there is provided a housing development comprising a plurality of building systems according to any embodiment for the first aspect of the invention. The housing development may, for example, be located on a floodplain.

According to a fifth aspect of the invention there is provided a method of building a building system, the method comprising:
laying a foundation key comprising an elongate beam with an upper surface and a support securing the foundation key to the ground;
providing a building comprising a base supporting a superstructure, the base having a bottom surface with a recess shaped to correspond to the shape of the upper surface of the elongate beam and adapted to locate the base over on the elongate beam;
positioning the building over the foundation key such that the recess is located on the upper surface of the foundation key.

In some embodiments, the method may further comprise:
laying a support pile in the ground;
attaching a pole to the support pile; and
attaching the pole to the building with a slidable attachment.

In some embodiments of the method, the elongate beam may comprise an internal chamber and an access port in communication with the internal chamber, the method further comprise connecting a first end of an extendable or flexible tube to the access port and a second end of the extendable or flexible tube to the building.

### Detailed Description

The invention is described in further detail below by way of example and with reference to the accompanying drawings, in which:
figure 1A is a schematic sectional side view of a building system according to an example embodiment, with the base of the building resting on the foundation key;
figure 1B is a schematic sectional side view of the building system of figure 1A during a flood event;
figure 2a is a schematic sectional side view of an alternative form of foundation key for use with the building system of figures 1A and 1B;
figure 2b is a schematic sectional side view of a further alternative form of foundation key;
figure 3 is a schematic plan view of an example embodiment of a foundation key and anchoring system;
figure 4 is a schematic plan view of a plurality of building systems in place on a floodplain; and
figure 5 is a schematic sectional side view of a building system according to an alternative example embodiment, with the building provided as two initially separate parts.

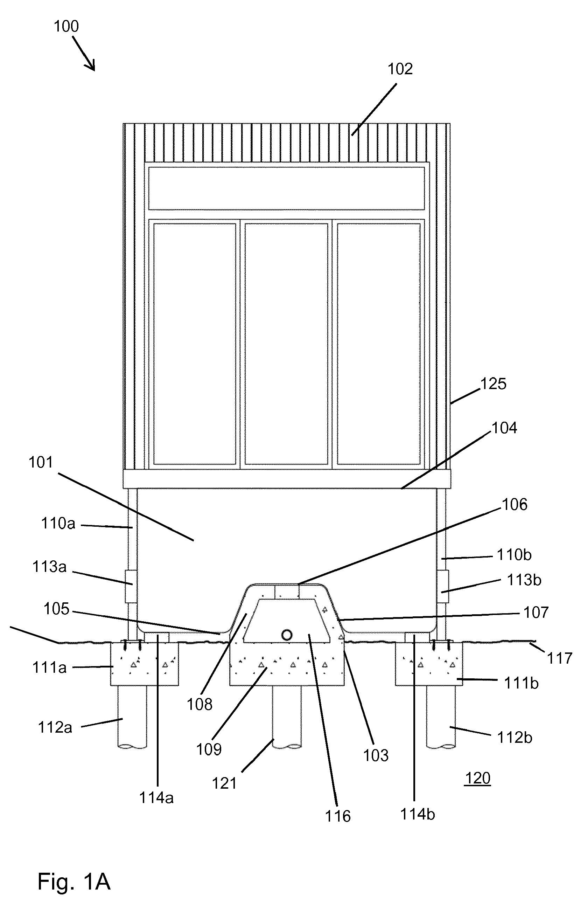

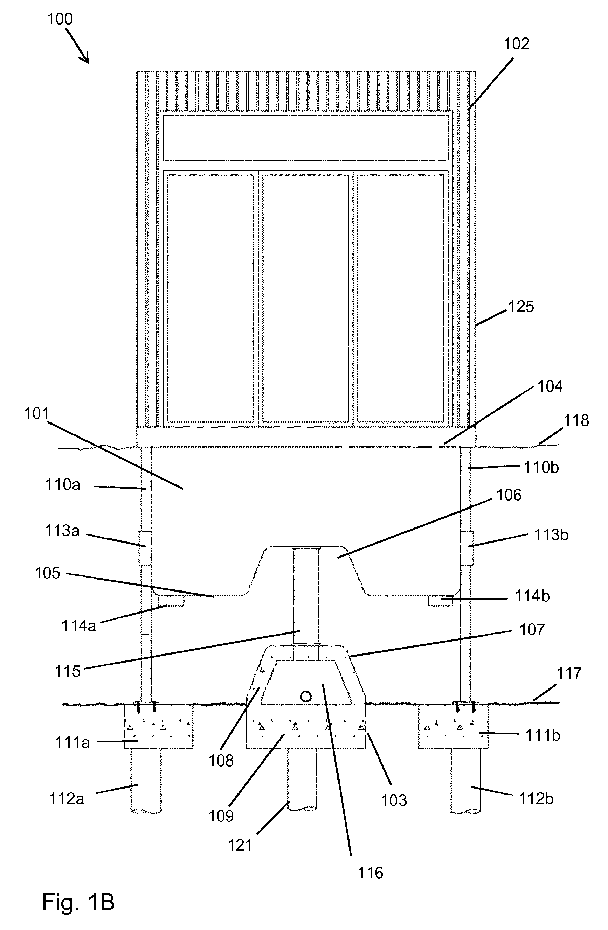

Figures 1A and 1B illustrate an exemplary embodiment of a floatable building system 100 according to the present invention. The building system 100 comprises a base in the form of a watertight hull 101, a habitable superstructure 102, and a foundation key 103. Together, the hull 101 and superstructure 102 form a floatable building.

The habitable superstructure 102 is secured on a top surface 104 of the hull 101. The superstructure 102 may be, for example, a residential building such as a house, or may be customised for business use, such as offices. In some embodiments the habitable space may extend into the interior of hull 101, for example forming a basement for the house above.

A bottom surface 105 of the hull 101 is shaped so as to form a recess 106. The cross-sectional shape of the recess 106 substantially matches the cross-sectional shape of the upper surface 107 of the foundation key 103, such that the floatable building may sit on, and be supported by, the foundation key 103, with the foundation key 103 located in the recess 106.

The foundation key 103 is formed of an upper elongate beam 108, which has a surface 107 shaped to match the recess 106 in the hull 101, and a lower foundation key support 109. The foundation key support 109 is adapted to secure the foundation key to the ground. In the illustrated example, the foundation key support 109 is buried in the ground to provide a firm foundation to the foundation key 103. Also in the illustrated example, the elongate beam 108 and foundation key support 109 are formed of a single continuous piece of material such as concrete, and have substantially equal lengths. Other arrangements of foundation key support 103 are possible. For example, smaller foundation key supports 109 may be located at each end of the elongate beam 108, with each end of the beam 108 attached to a pile so as to anchor the beam 108 to the ground. One or more piles 121 may be provided for securing the elongate beam 108 to the ground 120. The pile or piles 121 provide a firm point on which the load of the elongate beam 108, and consequently the building, may be supported by. Typically two piles may be provided at spaced apart locations along the length of the beam 108, although more may be needed if the beam is particularly long or the ground is relatively unstable. The pile or piles 121 may extend further into the ground 120 if the subsurface material is more unstable, for example if the subsurface material is sandy or clay. A shorter pile may be needed if the subsurface is rocky.

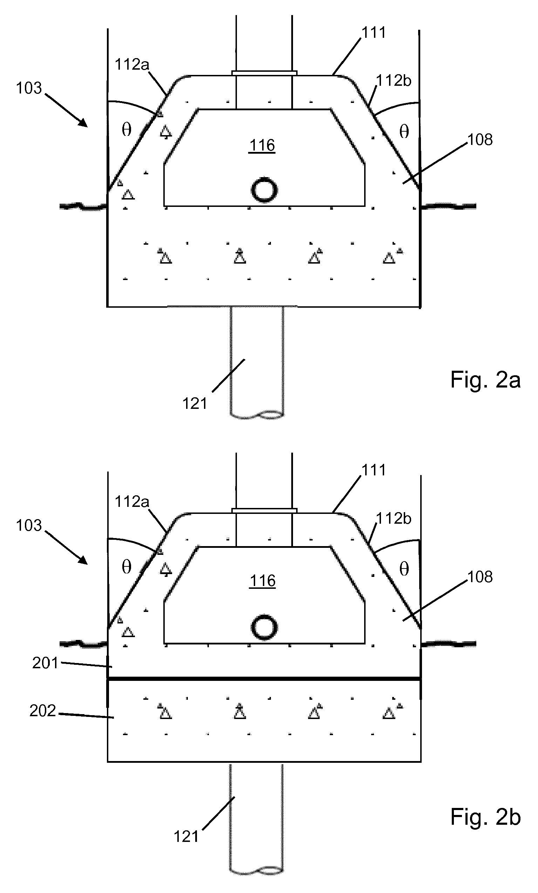

In the illustrated example, and further illustrated in detail in the example embodiment of the foundation key 103 in figure 2a, the upper surface 107 of elongate beam 108 comprises a top surface 111 and two sloping sides 112a, 112b tapering towards the top surface 111. Similarly, the recess 106 of the hull 101 comprises a top surface and two sloping sides that taper towards the top surface. Such a shape may be advantageous for re-locating the building on the foundation key after a flood, as the opening of the recess 106 is wider than the top surface 111 of the foundation key 103. Small horizontal movements of the building with respect to the foundation key 103 may therefore be permitted and corrected for as the flood waters recede and the building rests again on the foundation key 103. The tapered shape is also advantageous for non-floating embodiments, where the building can be more easily lowered onto and located securely on the foundation key.

The tapering sides 112a, 112b of the foundation key elongate beam 108 are both at an angle θ relative to the vertical when the foundation key 103 is in position in the ground, as indicated in figures 2a and 2b. The angle θ may be between 15 and 45 degrees, optionally between 25 and 35 degrees, and optionally around 30 degrees. The embodiment illustrated in figures 1A and 1B have a foundation key with a tapering angle of around 20 degrees, while the embodiment in figures 2a and 2b shows a foundation key with a tapering angle of around 30 degrees. The corresponding tapering sides of the recess 106 of the hull 101 are preferably arranged to match those of the foundation key, i.e. with similar angles to the vertical when the building is upright.

The tapering sides 112a, 112b may be coated with a layer of a compressible plastics (i.e. polymeric) material such as polyethylene or polytetrafluoroethylene (PTFE) to allow for a sliding contact between the tapering sides 112a, 112b of the foundation key 108 and the corresponding tapering sides of the recess 106 of the hull 101. This allows the hull 101 to more smoothly engage with the foundation key when the flood waters recede, ensuring that the building re-engages securely with the foundation key in case of any minor misalignments. The corresponding surfaces of the recess 106 of the base may also (or alternatively) be coated with a similar layer of material. The polymeric material may alternatively or additionally be rubberised, allowing for a degree of stability and shock protection for earthquake prone locations.

Figure 2b illustrates an alternative form of the foundation key in figure 2a, in which the foundation key 103 is divided into two parts. A first upper part 201, which may be termed a raft, comprises the top surface 111 and tapering sides 112a, 112b, and serves to provide a surface for the building to rest on. As with the embodiment in figure 2a, the tapering sides 112a, 112b may comprise a polymeric coating for ensuring smooth and reliable engagement with a corresponding recess. The first part 201 may comprise an interior chamber 116, which is described in further detail below. In other embodiments the first part 201 may be solid, i.e. without an internal chamber. A second lower part 202, which may be termed a flange, comprises the lower section of the foundation key 103 and serves to anchor the foundation key to the ground. Having the foundation key in two parts allows for each part to be optimised for its expected purpose, depending on the conditions in which the building system is to be used. The material from which each part is made may for example be selected according to the expected ground conditions, while the raft 201 may be selected based on the expected requirements for services at the location, for example by selecting a raft with or without an internal chamber 116. The raft 201 may also be selected to have a height that is dependent on the extent to which a separation is required between the building base and the ground. In earthquake prone areas, a higher raft 201 may be desired so that a gap can be provided between the building and the ground, within which may be provided damping elements such as rubber mounts. The flange 202 may be made from a different material or a different type of concrete, and with a different depth, depending on whether the location is expected to be prone to flooding. The raft 201 may be mounted and fixed to the flange 202 with a series of bolts, which may be embedded in the flange 202, allowing the raft to be removed if required and the flange left in place, resulting in minimal residual impact on the ground if the building is removed.

The building system 100 may further comprise an anchoring system, which serves to maintain the building in a fixed horizontal position relative to the ground. The anchoring system shown in figures 1A and 1B comprises posts 110a,b connected, for example via bolts, onto the pile caps 111a,b of concrete piles 112a,b. Concrete piles 112a,b extend into the ground to secure pile caps 111a,b in position. The posts 110a,b are thereby held in a fixed position relative to the ground and the foundation key 103. The posts 110a,b may for example be steel posts. They may have a substantially square cross-section, for example with outer dimensions of approximately 100mm x 100mm.

Each post 110a,b passes through a sliding collar 113a,b such that the sliding collars 113a, 113b may slide up and down the posts 110a,b. The sliding collars 113a,b are fixed to the sides of the hull 101. Preferably, the inner dimensions of sliding collars 113a,b are substantially the same as, or only slightly larger than, the outer dimensions of posts 110a,b, in order to substantially prevent lateral movement of the building.

Although only two posts 110a,b and other corresponding features of the anchoring system are described here and shown in figures 1A and 1B, the building system 100 may comprise any suitable number of posts, piles, pile caps, and sliding collars, for example one, two, three or four of each. A set of four of each may desirable, with each set located near each of the four corners of a four sided building 102.

Figure 1A shows building system 100 during a dry season, i.e. when flood water is not present. The building 125 rests on the foundation key 103, which supports substantially the entire weight of the building 125. In the illustrated embodiment, the height of the foundation key 103 above ground level 117 is slightly larger than the depth of the recess 106, so that unsupported parts of the bottom surface 105 of the hull 101 are suspended above the ground. For example, the space between the ground level 117 and bottom surface 105 may be between 2.5 and 12.5 cm or in some cases up to 30 cm. In this way, the physical footprint of building system 100 may be minimised, and a space is provided for water to flow underneath the hull 101 during a flood. Allowing space beneath the hull 101 for water to flow is advantageous in minimising movement of the building during the initial onset of a flood event, when the incoming water will tend to be more turbulent. The space also prevents the hull from being in contact with the ground, which will tend to reduce corrosion and fouling.

Additional supports 114a,b may be provided on the bottom surface 105 of hull 101 or on each pile cap 111a,b. The additional supports 114a and 114b are positioned so that they provide extra support to the floatable building when resting on the foundation key 103, without a substantial impact on the footprint of the building structure 100. The additional supports serve to prevent tilting of the building, for example due to uneven loading within the building or due to wind loading. These supports may also serve to absorb shock loading, for example when the building, which may or may not be configured to float, is installed in earthquake prone locations, where the supports may provide a resilient mount for the building.

Figure 1B shows the same floatable building structure 100 during a flood. The building rises with the flood water in accordance with Archimedes' principle, i.e. the total weight of the building 125 should be less than the weight of the volume of water displaced by the hull 101. Preferably, the floatable building 125 is designed such that the surface of the flood water 118 is just below the top surface 104 of hull 101. This arrangement provides a maximum stability to the floatable building, whilst ensuring that the superstructure 102 is above the surface of the water 118.

As the floatable building rises, the slidable collars 113a,b slide up the poles 110a,b. The poles 110a,b permit only vertical movement of the building, so that the building remains in a fixed position above the foundation key 103. When the flood water recedes, the building 125 falls with the water level and sits once again on the foundation key 103 in the same position as before. Any horizontal movement allowed by tolerances between the poles 110a,b and the collars 113a,b can be compensated by the tapered shape of the foundation key 103 and the recess, which will tend to lock the hull 101 in place on the foundation key 103 when the water recedes.

The length of poles 110a,b may be selected so that the floatable building does not rise above the poles during a flood. In particular, the length of a pole 110a,b between the position of a sleeve 113a,b and the top of the pole 110a,b should be at least as high as the maximum estimated potential flood height.

In order to provide uninterrupted services to the floatable building during a flood, such as electricity (for example a 12V DC or 240V AC electricity supply), water, phone, internet, and removal of waste products, a flexible or extendable tube 115, for example a telescopic tube, may be connected to the floatable building, for example to a sealable utility port in the recess of the hull 101 of the floatable building. Utility connections, such as wires and plumbing, may pass through the tube 115. When the building rises with the flood water, the tube 115 may extend to maintain a constant connection to the floatable building.

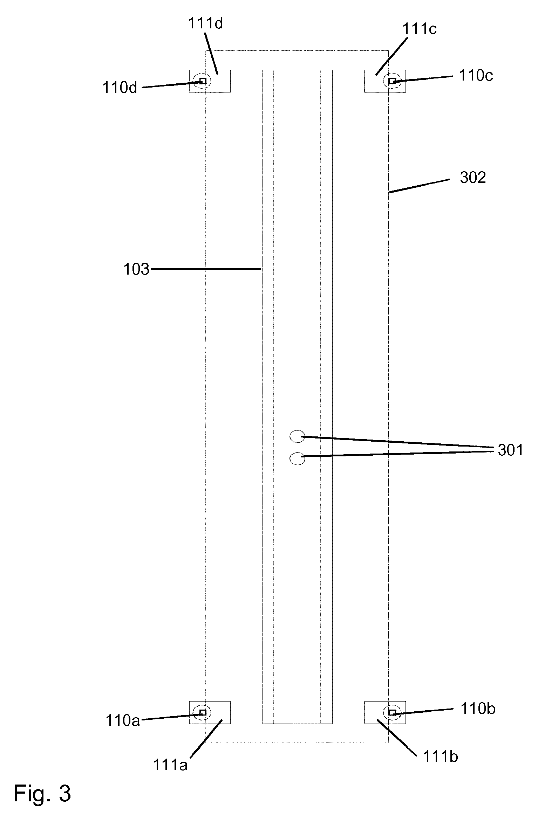

The other end of tube 115 may be connected to a fixed utility supply that does not float with the building. In the illustrated embodiment, the tube 115 is connected to the foundation key 103. The foundation key 103 comprises an internal chamber 116, which may contain connections to utility sources such as electricity, water supply or a sewage outlet, and/or may contain means for strong waste products from the floatable building. Tube 115 may be connected to the internal chamber 116 through one or more access holes 301, as shown in figure 3. For example, access holes may be located on the top surface of the foundation key 103. Additional access holes may be located elsewhere on the foundation key 103, for example to provide an input from a utility grid to the internal chamber 116. The internal chamber may, for example, be configured to allow it to be used to temporarily store effluent from the building during a flood event, when it may not be possible to transport the effluent beyond the building. A sealable port may be provided on the internal chamber to allow the internal chamber to be isolated during a flood event.

During a flood event, as the building lifts off the foundation key 103 a space is created underneath the hull 101. In some circumstances, for example where the flood event is associated with a storm, debris may be carried by the flood water and could become lodged underneath the hull 101. Such debris could, for example, be floating debris such as logs and branches or non-floating debris that is carried by strong currents. Such debris, particularly non-floating debris, may prevent the hull 101 from coming back down to properly engage with the foundation key after the flood event subsides, which would require the building to be lifted off the foundation key to allow the debris to be removed. To address this potential problem, a shutter may be connected between the hull and the ground, the shutter being extendable to allow for the hull to lift vertically off the ground. The shutter is preferably of an open construction to allow for the passage of water through the shutter, although in alternative examples spaces around the ends of the shutter (for example at the corners of the building or along other sides without a shutter) may be sufficient to allow the passage of water. The shutter may be extendable by extending from a roll attached to the hull or the ground, or may be of a hinged construction allowing the shutter to expand, for example in the form of a trellis shutter. A shutter may be provided along one or more sides of the building, for example forming a skirt extending along all four sides of a rectangular form of building, or may be provided along only one side, for example to face the direction from which flood water is expected to travel. The shutter may be of a lightweight construction, made for example primarily of a polymeric material, so that it does not adversely affect the buoyancy of the building.
Figure 3 shows a schematic plan view of the foundation key 103 and anchor system of the floatable building system 100. The footprint 302 of the building is indicated, which is substantially greater than the area taken up by the foundation key 103 and piles 112a-d for the anchoring system. The environmental benefit from a reduced footprint on the land is one of the advantages of the present invention.

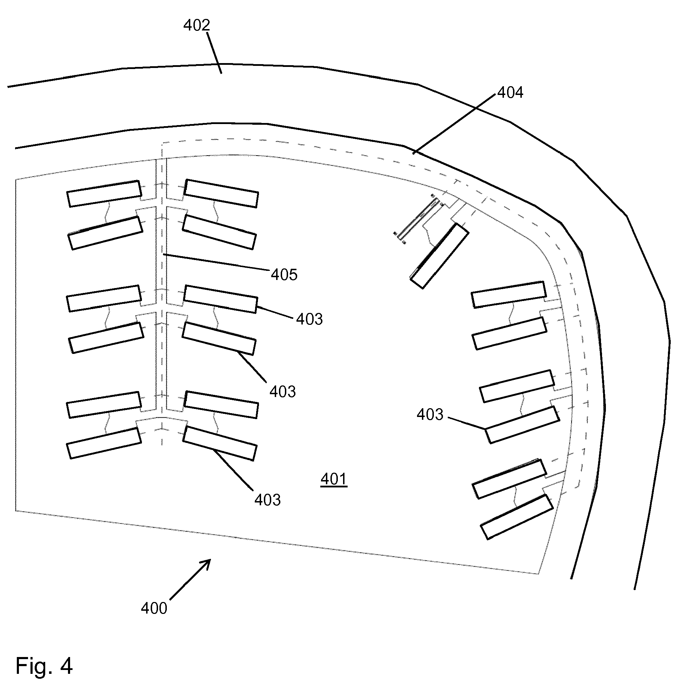

Figure 4 shows a schematic of a housing development 400 on a floodplain 401 next to a river 402. The housing development 400 comprises a plurality of building systems 403 (for clarity, not all housing systems are labelled), each of which may comprise the building system 100 illustrated in Figure 1A and 1B.

It may be preferable, as in the illustrated embodiment, to build a raised levee or dyke 404 between the development 400 and the river 402. Water may be allowed into the floodplain 401 only by a sluice gate in the levee. In this way, the flow of water into the floodplain 401 may be controlled, so that the water in the floodplain is relatively calm in order to prevent damage to the floatable building systems 403. This may be particularly important if housing development 400 is located adjacent to the sea, rather than a river. To further limit damage, floatable building systems 403 may be aligned with a typical local direction of flow of water during a flood event.

A levee and sluice gate may allow the housing development 400 to be used as part of an active flood management system. If conventional settlements further downstream are likely to flood, the sluice gate to development 400 may be opened, in order to flood the floodplain 401, and so lower the chance of any flooding downstream by acting as a buffer for some of the flood waters. The raised levee 304 may also be used, for example, to park vehicles on, so that these are kept away from flood water. Additionally, development 400 may comprise floatable roads or pathways 405, so that access to the floatable building structures 403 can be maintained during flood events. The pathways 405 may be in the form of pontoon boardwalks, for example comprising a structural deck for supporting people and/or vehicles with underlying buoyant elements for supporting the weight of the structural deck in flood events. The buoyant elements may for example be buoyant air-filled chambers and/or closed cell foam blocks (such as expanded polystyrene).

To further reduce the environmental impact of the development 400, the development may be configured to operate on an integrated energy system basis. This may be achieved for example by maximising the use of locally available renewable energy technologies, deploying the most energy efficient appliances and managing the total energy needs of the site. The overall aim is to ensure that the CO₂ equivalent per person and per square metre is substantially lower than that for conventional housing developments.

As a further environmental aim, the development may be configured to be "zero carbon", supporting an aim to have little or no impact on the local environment. Electricity generation may be provided from a number of on-site renewable sources where possible, complemented by a local energy storage system which aims to maximise the use of generated power on site. The development may then operate as a "microgrid" with a community energy system.

A primary benefit of using local renewable generation will be to limit the size of the electricity grid connection required from the local distribution system. This will limit the need for costly and disruptive engineering and civil works to provide a new work connection to the site. The electrical load for the site will thereby be substantially lower than that required for a typical housing development.

Low voltage (e.g. 12V DC) systems and energy efficient appliances may be implemented throughout the development. This will substantially reduce the electrical loading for the floatable buildings 403 and energy usage overall. Equipment may be designed to work within a community energy system and comply with IEE wiring standards for the environment.

Heating of the floatable buildings 403 may be achieved through a centralised 'district heating' system whereby steam or hot water is pumped to each home to provide heating. A central boiler may be used, powered by local generated electrical energy, solar thermal, biomass and heating fuels as input sources.

Each floatable building 403 may be provided with a high degree of thermal insulation, reducing space heating requirements to much below conventional brick built houses. Windows, doors and roofs may be designed to employ the latest energy efficient materials and techniques.

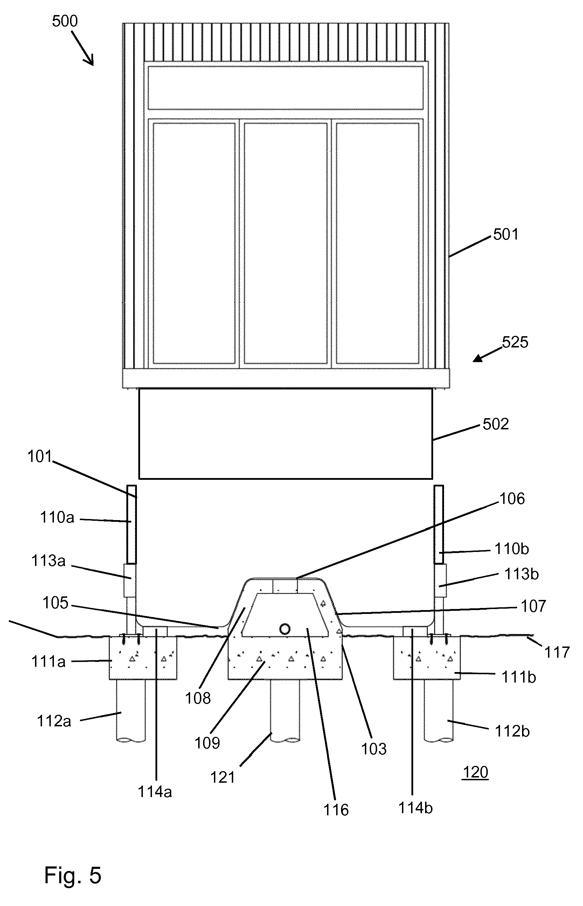

A further alternative example of a building system 500 is illustrated in figure 5, in which the building 525 is constructed of two initially separate parts. In the example shown, a first part of the building 525 has an upper section 501 containing the habitable space of the building 525 and a lower section 502 that is configured to fit within a second part forming the hull 101. The lower section 502 of the first part of the building is configured to fit within the internal volume of the hull 101. The hull 101 is initially provided as a separate structure so that the hull 101 can be installed in place over the ground construction, including the foundation key 103, and the first part of the building 525 can be provided once the hull 101 is in place. The lower section 502 may be of a simple box-like construction, or may be shaped to fit the internal volume of the hull 101. In alternative examples, the first part of the building 525 may comprise only the upper section 501 shown in figure 5, i.e. without the lower section 502, and may be connected to the upper surface of the hull 101. In a general aspect therefore, the building may comprise first and second parts, a first part containing habitable space and a second part comprising the hull. A lower section of the first part may be configured to fit within an internal volume of the hull.

Other embodiments are intentionally within the scope of the invention, which is defined by the appended claims.

## Claims

1. A building system comprising:
a foundation key comprising an elongate beam with an upper surface and a support securing the foundation key to the ground; and
a building comprising a base supporting a superstructure, the base having a bottom surface with a recess shaped to correspond to the shape of the upper surface of the elongate beam and adapted to locate the base over the elongate beam such that the foundation key supports the weight of the building.

2. The building system of claim 1 wherein the base comprises a hull defining a buoyant chamber in which the recess is provided.

3. The building system of claim 1 or claim 2 wherein a footprint defined by the foundation key is less than 33%, optionally less than 20%, and optionally between 10 and 15%, of a footprint defined by the building.

4. The building system of any preceding claim wherein an unsupported part of the bottom surface of the base is suspended above the ground while the foundation key supports the weight of the building.

5. The building system of any preceding claim comprising a sealable utility port located in the recess of the hull and connected to the foundation key with an extendable and/or flexible tube, the foundation key optionally comprising an internal chamber in communication with the tube via an access port.

6. The building system of any preceding claim comprising an anchoring system for limiting horizontal movement of the building relative to the ground, the anchoring system comprising one or more slidable connections between the building and the ground, the anchoring system optionally comprising a post secured to the ground and slidably connected to the building with a collar.

7. The building system of any preceding claim wherein the base comprises two laterally adjacent hull sections, the recess formed by a space between the hull sections.

8. The building system of any preceding claim wherein the elongate beam and the recess each comprise a top surface and two side surfaces tapering towards the top surface, an angle between each side surface of the elongate beam and/or the recess being optionally between 15 and 45 degrees, between 25 and 35 degrees, or around 30 degrees, to the vertical when the foundation key is in position in the ground, each side surface of the elongate beam and/or the recess optionally comprising a layer of a compressible polymeric material.

9. The building system of claim 2 comprising a shutter connected between the hull and the ground along one or more sides of the building, the shutter being extendable to allow for the hull to lift vertically off the ground.

10. The building system of claim 2 wherein the building comprises first and second parts, a first part containing habitable space and a second part comprising the hull, a lower section of the first part being optionally configured to fit within an internal volume of the hull.

11. A building comprising a base supporting a superstructure, the base having a bottom surface with a recess shaped to be locatable on a correspondingly shaped foundation key, the recess comprising an upper surface and two sides which taper towards the upper surface, such that the recess is narrower at the upper surface.

12. A foundation key for supporting a building, the foundation key comprising:
an elongate beam adapted to be locatable in a recess of a building and to support the weight of the building; and
a foundation key support connected to the elongate beam, the foundation key support securing the foundation key to the ground, the elongate beam having a top surface and two sides tapering towards the top surface such that a width of the elongate beam is narrower across the top surface.

13. The foundation key of claim 12 comprising an internal chamber and an access port in the top surface in communication with the internal chamber.

14. A method of building a building system, the method comprising:
laying a foundation key comprising an elongate beam with an upper surface and a support securing the foundation key to the ground;
providing a building comprising a base supporting a superstructure, the base having a bottom surface with a recess shaped to correspond to the shape of the upper surface of the elongate beam and adapted to locate the base over on the elongate beam;
positioning the building over the foundation key such that the recess is located on the upper surface of the foundation key.

15. The method of claim 14 wherein the elongate beam comprises an internal chamber and an access port in communication with the internal chamber, the method further comprising connecting a first end of an extendable or flexible tube to the access port and a second end of the extendable or flexible tube to the building.
